# EUROPEAN PATENT APPLICATION

(11) **EP 1 601 183 A1**
(43) Date of publication of application: **30.11.2005**
(21) Application number: 04255765.2
(22) Date of filing: 22.09.2004
(51) Int. Cl.: H04N 3/15

(54) **Solid-state image pickup apparatus, and its driving method**

(30) Priority: 28.05.2004 JP 2004160217
(71) Applicant: FUJITSU LIMITED, Kawasaki-shi, Kanagawa 211-8588 (JP)
(72) Inventor: Yanagisawa, Makoto c/o Fujitsu Limited, Kawasaki-shi Kanagawa 211-8588 (JP); Inoue, Tadao c/o Fujitsu Limited, Kawasaki-shi Kanagawa 211-8588 (JP); Yamamoto, Katsuyoshi c/o Fujitsu Limited, Kawasaki-shi Kanagawa 211-8588 (JP)
(74) Representative: Mohun, Stephen John

(57) **Abstract**

A shift register (21) outputs a selection signal for selection of a horizontal sequence of pixels of a two-dimensional pixel array (20), and includes a vertical shift register (21) for applying a selection signal to the pixel array (20) from either the outer left side or the outer right side of the pixel array (20), and a voltage applying device (34) for applying a power supply voltage for reading data for a horizontal sequence of pixels from an opposite side of a supply of the selection signal to the pixel array (20) after the selection signal is output.

## Description

### Background of the Invention

### Field of the Invention

The present invention relates to a solid-state image pickup apparatus such as a CMOS sensor, etc., and more specifically to a solid-state image pickup apparatus having a vertical shift register for selection of a horizontal sequence of pixels of a two-dimensional pixel array provided on one side of a pixel array for supplying a pixel data read voltage from both sides of a pixel array while reducing a layout area, and a pixel data read voltage applying method.

### Description of the Prior Art

Conventionally, a solid-state image pickup apparatus having a photoelectrical conversion device in, for example, a two-dimensional array in the vertical and horizontal directions, and reading electric charge accumulated in the respective photoelectrical conversion devices using a plurality of transistors has been commonly used.

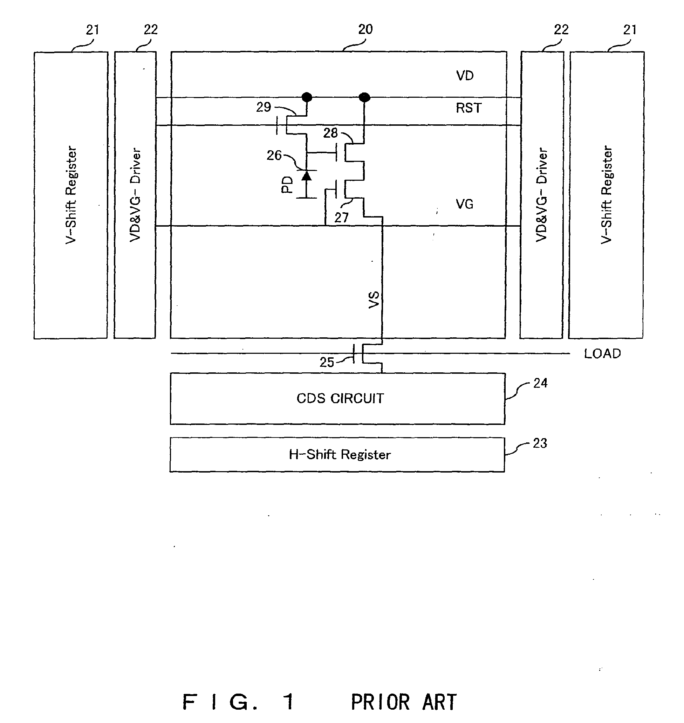

FIG. 1 is a block diagram showing the configuration of the above-mentioned conventional solid-state image pickup apparatus. In FIG. 1, the apparatus includes a pixel array 20 which is surrounded by a vertical shift register 21 for selecting a horizontal sequence of pixels, a VD & VG driver 22 for driving a transistor corresponding to each pixel, a horizontal shift register 23 for selecting pixel by pixel a horizontal sequence of pixels, a correlation duplex sampling (CDS) circuit 24 for reducing the random noise of a read signal, and a (MOS) transistor 25 for receiving a load signal at the gate and supplying a read signal VS to the CDS circuit 24.

The pixel array 20 contains a photodiode 26 corresponding to one pixel, and three transistors for controlling a read of the electric charge. The pixel is selected by supplying a signal VG to the gate terminal of a transistor 27, a power supply voltage signal VD is supplied to the drain terminal of a transistor 28, and a reset signal (RST) is supplied to the gate terminal of a transistor 29.

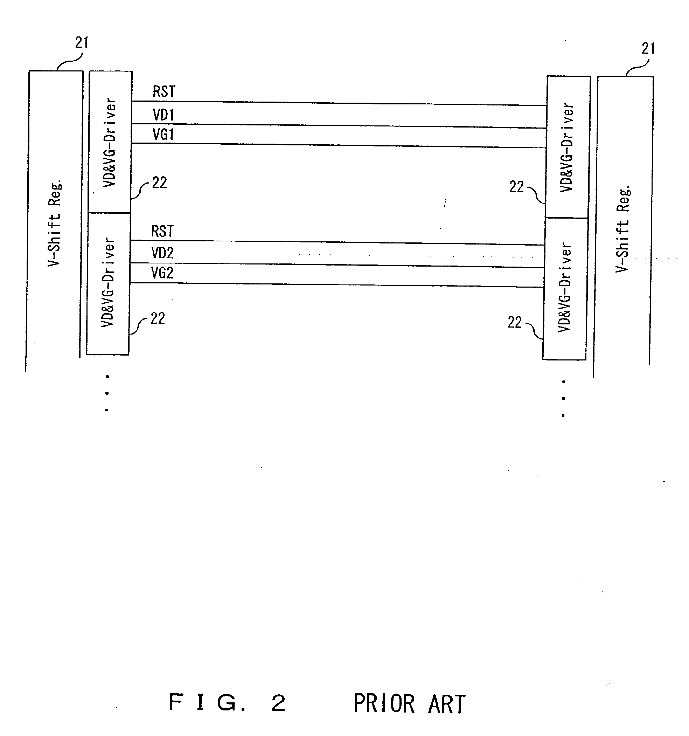

FIG. 2 is an explanatory view showing the configuration of the vertical shift register and the driver for vertically selecting a horizontal sequence of pixels in the conventional technology shown in FIG. 1. The vertical shift register 21 outputs a selection signal for selection of a horizontal sequence of pixels. By supplying a selection signal to a driver to be selected in the VD & VG driver 22 corresponding to the horizontal sequence of pixels, a VG signal, a VD signal, and an RST signal are supplied to the selected horizontal sequence of pixels, and pixel data is read.

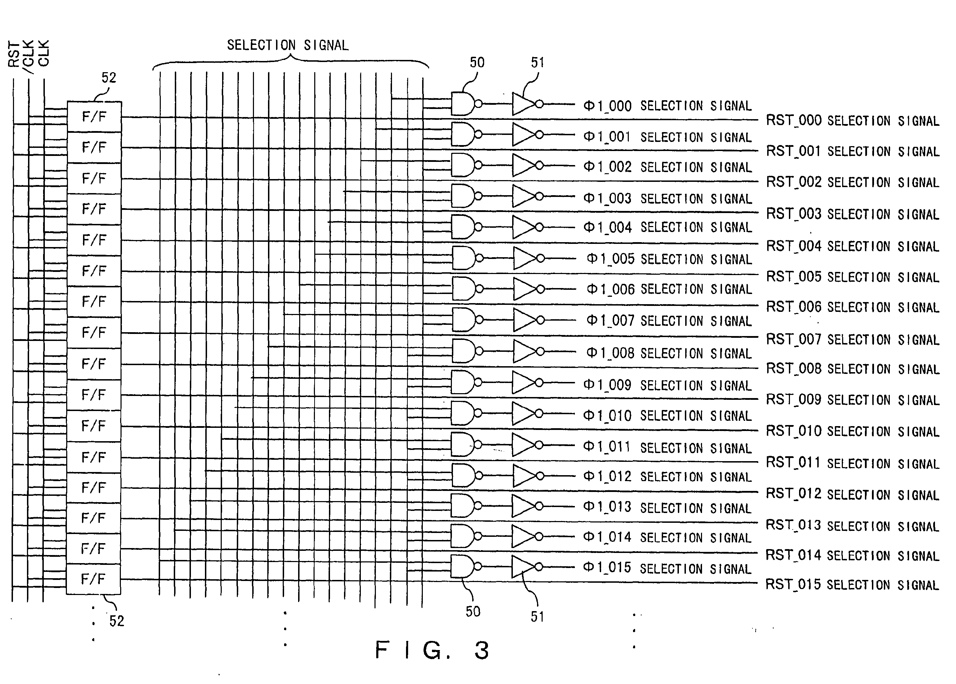

FIG. 3 shows an example of the configuration of the vertical shift register provided on both sides of the pixel array in FIGS. 1 and 2. In FIG. 3, the shift register includes a NAND gate 50, an inverter 51, and a flipflop 52 for outputting a selection signal and a reset (RST) signal to a horizontal sequence of pixels, that is, each pixel in a vertical sequence of pixels, and is provided with a number of pieces of wiring corresponding to the decode line for selection of a pixel.

Using the shift register shown in FIG. 3, for example, pixels in a vertical sequence of pixels are sequentially selected from the top of the pixel array so that pixel data can be read, a pixel can be sequentially selected downward starting with a pixel in an arbitrary position, and in an inverse direction. In the left flipflops 52, only the flipflop corresponding to a selected vertical sequence of pixels stores the selection status, and an RST selection (reset) signal is assigned to a pixel selected by the inversion of the output at the input of the RST signal.

However, in the conventional technology explained by referring to FIGS. 1 through 3, a vertical shift register for vertically selecting a pixel on both sides of the two-dimensional pixel arrays is provided, and the VD & VG driver supplies a power supply voltage for reading pixel data from both sides corresponding to the selection signal output by the vertical shift register.

Thus, the shift registers are provided on both sides, and pixels are driven from both sides because the number of horizontal pixels have increased with an increasing number of larger screens, and a voltage drop occurs and a capturing capability is reduced for the power supply voltage on the rightmost pixel on the screen when a pixel is driven only from one side, for example, from left.

However, when a voltage applying device is arranged on both sides of the pixel array, the vertical shift register is configured by a large number of elements and pieces of wiring. Therefore, the required area is large and it is difficult to downsize the image pickup device.

Relating to the block diagram solid-state image pickup apparatus, the following documents have been published.

Patent literature 1: Japanese Patent Application Laid-open No. Hei 11-26740 "Solid-state Image Pickup Apparatus"

Patent literature 2: Japanese Patent Application Laid-open No. 2003-134399 "Solid-state Image Pickup Apparatus and Driving Method"

The patent literature 1 has disclosed a technology of loading a step-up circuit onto a chip to provide a solid-state image pickup apparatus having a high conversion gain with less afterimages at a low power supply voltage.

The patent literature 2 has disclosed a technology of realizing a downsized image pickup element without reducing an effective area of a photoreceiver with the number of pieces of wiring reduced by partially sharing the wiring around some pixels.

However, in the two documents, a vertical shift register is provided on both sides of the two-dimensional pixel array, and the area of the vertical shift register is large, thereby failing in solving the problem that the image pickup device can hardly be downsized.

### Summary of the Invention

The present invention has been developed to solve the above-mentioned problems and aims at providing a solid-state image pickup apparatus having a high capturing output performance with the layout area and the cost reduced by providing a vertical shift register, which has been provided on both sides of the two-dimensional pixel array, only on one side, and providing a driver for driving selected vertical pixels on both sides, and a pixel read voltage applying method.

The first solid-state image pickup apparatus according to the present invention is a solid-state image pickup apparatus having pixels arranged in a two-dimensional array, and includes: a vertical shift register for outputting a selection signal for selection of a horizontal sequence of pixels in a two-dimensional pixel array, and providing a selection signal for the pixel array in either an outer left side or an outer right side of the pixel array; and a voltage applying device for applying a power supply voltage for a read of data of a horizontal sequence of pixels from an opposite side of supply of the selection signal to the pixel array after outputting the selection signal by the vertical shift register.

The second solid-state image pickup apparatus according to the present invention is a solid-state image pickup apparatus having a plurality of pixels in a two-dimensional array for providing a voltage from both ends of pixel rows in the two-dimensional pixel array; and includes: a shift register, provided only on one end of the two ends, for selecting the row to which the voltage is supplied; and a voltage applying device for receiving a voltage fluctuation caused by a row selection of the shift register on the other end, and supplying a voltage on the other end to a row that the voltage fluctuation occurred.

The pixel read voltage applying method according to the present invention is a voltage applying method for reading pixel data in a solid-state image pickup apparatus having pixels in a two-dimensional array for supplying a selection signal for selection of a horizontal sequence of pixels in a two-dimensional pixel array from either an outer left side or an outer right side of the two-dimensional pixel array, and applying a power supply voltage for reading data for a horizontal sequence of pixels from an opposite side of supply of the selection signal to a pixel array after outputting the selection signal.

### Brief Description of the Drawings

FIG. 1 shows the entire configuration of the solid-state image pickup apparatus according to the conventional technology;
FIG. 2 is an explanatory view showing an example of the configuration of the vertical shift register and the driver in the conventional technology;
FIG. 3 shows an example of the configuration of the shift register according to the conventional technology;
FIG. 4 is a block diagram of the configuration of the solid-state image pickup apparatus of the present invention;
FIG. 5 is an explanatory view of the driver and the shift register corresponding to the pixels of one line according to the present embodiment of the present invention;
FIG. 6 shows the entire configuration of the solid-state image pickup apparatus according to the present embodiment of the present invention;
FIG. 7 is an explanatory view of the positions of the VD & VG driver and the VD driver according to the present embodiment;
FIG. 8 shows the configurations of the circuits of the VD & VG driver and the VD driver;
FIG. 9 is a time chart of the operation of the circuit shown in FIG. 8; and
FIG. 10 shows the configuration of the driver according to the conventional technology shown in FIG. 8.

### Description of the Preferred Embodiments

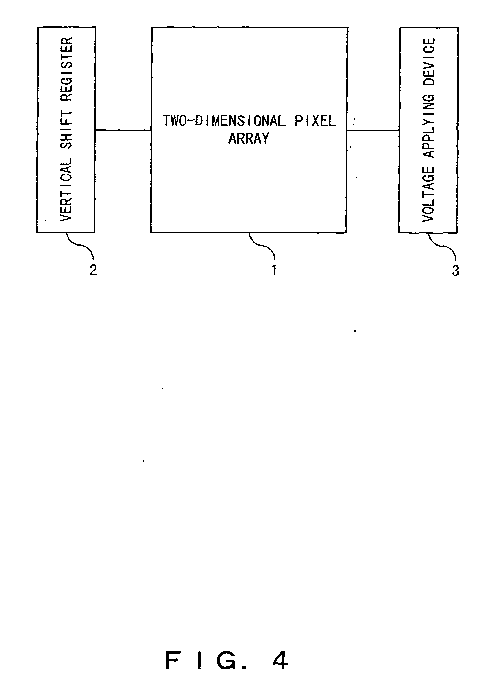

FIG. 4 is a block diagram of the configuration showing the principle of the solid-state image pickup apparatus according to the present invention. FIG. 4 shows the configuration of the principle of the solid-state image pickup apparatus having pixels in a two-dimensional pixel array, and the solid-state image pickup apparatus comprises at least a two-dimensional pixel array 1, a vertical shift register 2, and a voltage applying device 3.

The vertical shift register 2 outputs a selection signal for selection of a horizontal sequence of pixels of the two-dimensional pixel array, and provides a selection signal for the pixel array 1 from either the outer left side or the outer right side of the pixel array 1.

The voltage applying device 3 applies a power supply voltage for reading data for a horizontal sequence of pixels to the pixel array 1 from the opposite side of output of a selection signal after the vertical shift register 2 outputs the selection signal.

In the embodiment of the present invention, there also can be a voltage applying device provided on the shift register side for applying a power supply voltage for reading data for a horizontal sequence of pixels to the pixel array 1 from the side of the selection signal after the vertical shift register 2 outputs a selection signal.

Furthermore, according to the embodiment of the present invention, the voltage applying device 3 and/or a voltage applying device on the shift register side can apply a set-up voltage higher than a power supply voltage as a data read voltage for the pixel.

Additionally, a further embodiment can also comprise: a first delay device for delaying a selection signal output by the solid-state image pickup apparatus from the vertical shift register 2 and providing the signal for the voltage applying device 3; a second delay device for delaying output of the first delay device and providing the signal for the voltage applying device 3; and a third delay device for delaying a selection signal output from the vertical shift register 2 by a time corresponding to a sum of delay times by the first delay device and the second delay device, and providing the signal for the voltage applying device.

In the embodiment of the present invention, each pixel in the two-dimensional pixel array 1 comprises a CMOS element, and the output of the first delay device is provided for the gate of the MOS transistor for supply of the data read signal from a pixel to an external unit of the pixel array 1.

Furthermore, the solid-state image pickup apparatus of the present invention has a plurality of pixels in a two-dimensional array, and supplies a voltage from both ends for a sequence of pixels in a row direction of the two-dimensional pixel array, and comprises a shift register provided only on one end for selecting a row to which a voltage is supplied; and a voltage applying device for receiving a voltage fluctuation occurring by row selection by the shift register, and supplying a voltage from the other end for a row including the voltage fluctuation.

In the pixel data read voltage applying method according to the present invention, a selection signal for selection of a horizontal sequence of pixels of a pixel array is output from either an outer left or an outer right of the two-dimensional pixel array is output, and a power supply voltage is applied for reading data for a horizontal sequence of pixels on the opposite side of the output of a selection signal after outputting the selection signal.

As described above, according to the present embodiment, a vertical shift register is provided on either the outer left side of the outer right side of the two-dimensional pixel array, and a voltage applying device for applying a power supply voltage for reading data for the horizontal sequence of pixels is provided on the opposite side of the vertical shift register or both sides.

According to the present invention, one of the vertical shift registers provided on both sides of the two-dimensional pixel array can be omitted, thereby greatly contributing to the reduction of a layout area, the reduction of a cost, and downsizing an image pickup device.

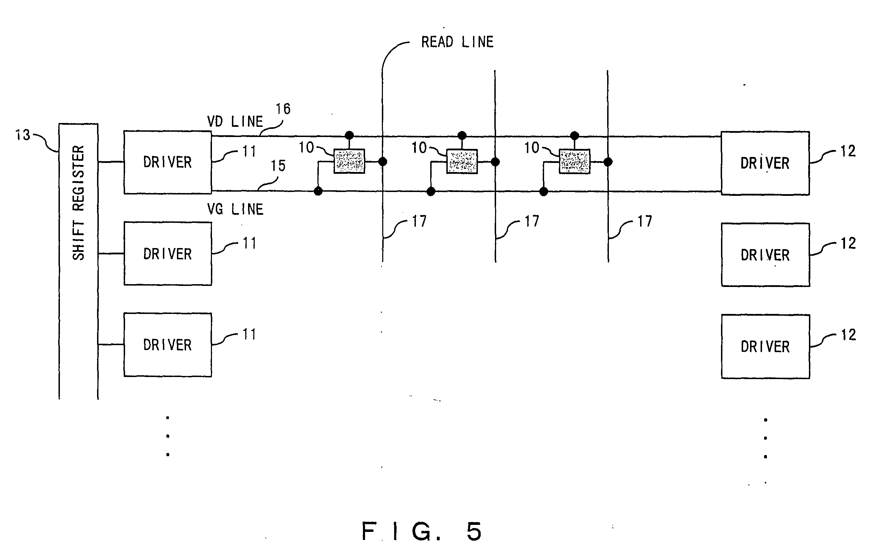

FIG. 5 is an explanatory view of the arrangement of a driver and a shift register corresponding to a horizontal sequence of pixels (in the row direction) and one line according to the present embodiment. In FIG. 5, a pixel 10 in a line is provided with a VG line 15 and a VD line 16 as in the prior art shown in FIG. 1. On both sides, drivers 11 and 12 are provided. For example, a shift register 13 is provided on the driver 11 side. From a pixel in the line selected by the shift register 13, pixel data is read one by one by a read line 17. The driver 11 on the shift register 13 side drives a pixel in the line selected by receiving the selection signal from the shift register 13, but the driver 12 on the opposite side loops back the signal from the driver 11 and drives a pixel. The configuration of the driver 11 is different from that of the driver 12. The configurations are described later.

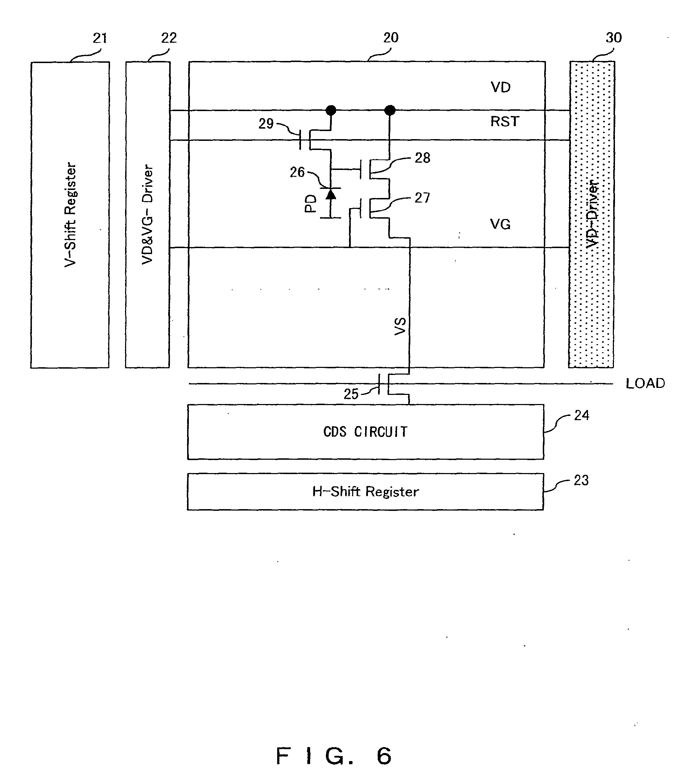

FIG. 6 is a block diagram of the entire configuration of the image pickup device according to the present embodiment. As compared with the conventional technology shown in FIG. 1, for example, the vertical shift register 21 of the pixel array 20 is omitted, and the right VD & VG driver 22 is replaced with a VD driver 30.

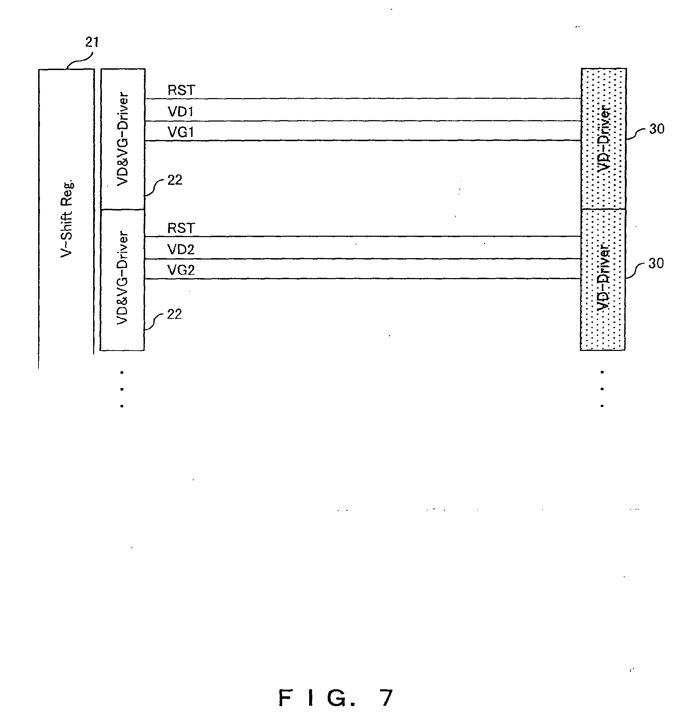

FIG. 7 is an explanatory view showing the arrangement of the driver and the vertical shift register according to the present embodiment corresponding to the conventional technology shown in FIG. 2. As shown in FIG. 6, only the VD driver 30 is provided on the right of the pixel array, and the VD driver 30 applies a power supply voltage signal VD for reading a horizontal sequence of pixels, that is, for readirig pixels of 1 line by looping back a VG signal from the VD & VG driver 22 on the right.

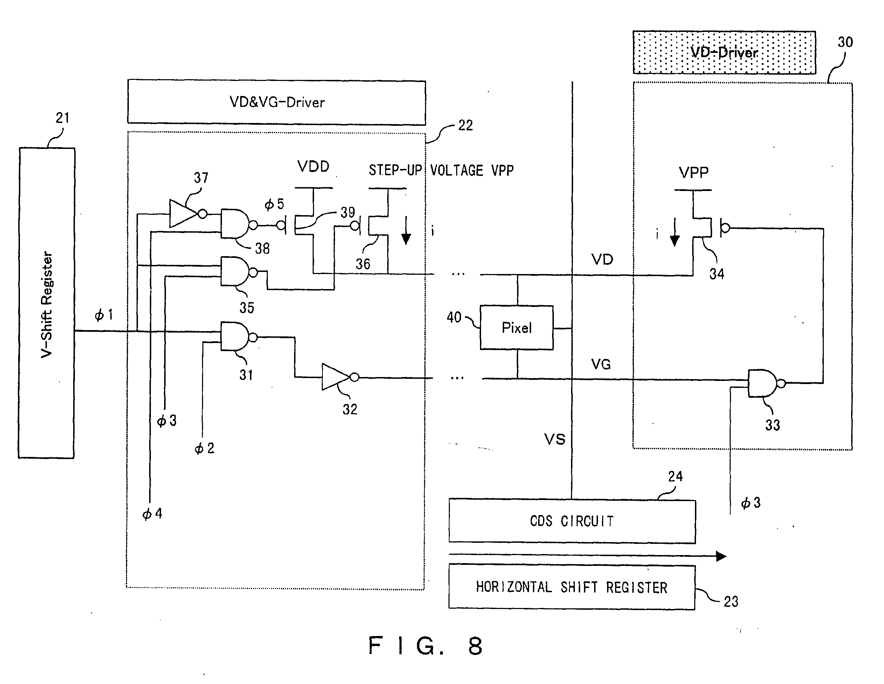

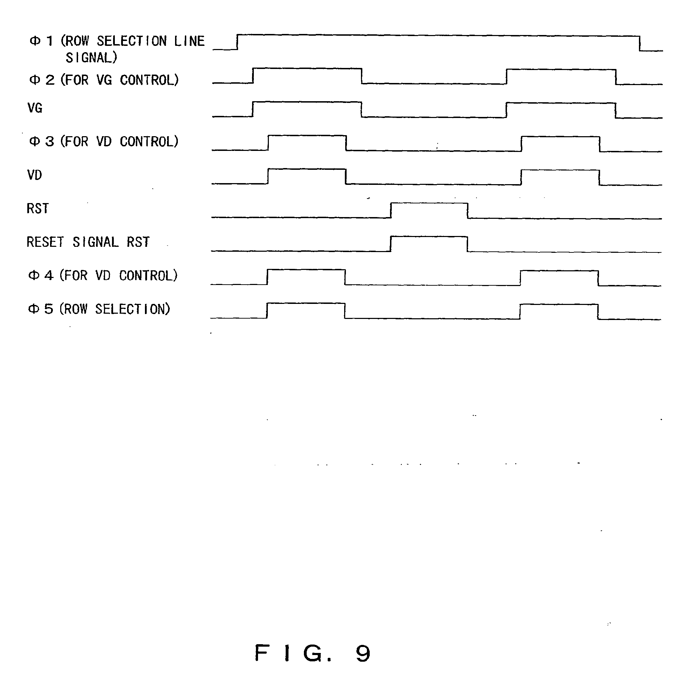

FIG. 8 shows the circuit showing the configuration of the VD & VG driver and the VD driver. FIG. 9 is a time chart of the operation in the circuit. The operation of the circuit shown in FIG. 8 is explained by referring to FIG. 9. In FIG. 8, a selection signal, that is, the row selection line signal φ1 shown in FIG. 9, is output from the vertical shift register 21. Then, as shown in FIG. 9, a VG control signal φ2 is output, and the output of a NAND gate 31 is an L level, and the output of an inverter 32 is an H level. For example, the signal provided for the gate of the transistor 27 shown in FIG. 6 is the H level, and the transistor 27 which provides a data read signal from a pixel for the external unit of the pixel array 20 is turned on.

Then, φ3 is output as a timing control signal for the VD control is output, the output of a NAND gate 33 on the VD driver 30 indicates the L level, a transistor 34 is turned on, and the signal VD for supplying a power supply voltage for a pixel indicates the H level. The step-up voltage VPP is a voltage is stepped up from the power supply voltage VDD of the image pickup device.

On the other hand, on the side of the VD & VG driver 22, the output of a NAND gate 35 indicates the L level when the VD control signal φ3 indicates the H level in addition to φ1, a transistor 36 is turned on, thereby providing the step-up voltage VPP for the VD line for the pixel from the left side of the pixel array.

The first delay device according to claims 5 through 8 of the present invention corresponds to the NAND gate 31 and the inverter 32 shown in FIG. 8, the second delay device corresponds to the NAND gate 33, the third delay device corresponds to the NAND gate 35, the voltage applying device according to claim 1 corresponds to the transistor 34, and the voltage applying device of the shift register side according to claim 2 corresponds to the transistor 36.

A transistor 39 applies the power supply voltage VDD to a pixel when the current line enters a non selection status. That is, when, in the selection status, φ1 indicates the H level, the output of an inverter 37 indicates the L level, and then the VD control signal φ4 indicates the H level as the signal φ3, the output of a NAND gate 38, that is, φ5 indicates the H level. Thus, the transistor 39 is not turned on, and the power supply voltage VDD is not applied to the VD line.

On the other hand, when the current line is not in the selection status, φ1 is in the L status, and the output of the 37 is in the H status. Therefore, when the signal φ4 enters the H status, the output φ5 of the NAND gate 38 becomes the L status and the transistor 39 is turned on, and the power supply voltage VDD is applied to a pixel. The pulse of the VD control signal φ3 and φ4 indicate the same positions, and the positions can be displaced with the skew (phase), etc. taken into account. Furthermore, the power supply voltage VDD is applied to the pixel of the line not in the selection status to reduce the noise due to the influence of the charge accumulated in the photoelectrical conversion device of the pixel not in the selection status.

As described above, in the circuit shown in FIG. 8, when the VG control signal φ2 becomes the H status on the VD & VG driver 22, and the output of the 32 becomes the H status, the signal φ3 becomes the H status, and a time difference is set from the time when the 34 is turned on until the step-up voltage VPP is applied to the VD line. That is, by setting a time difference from the H status of the VG to the application of the VPP to the VD line, it is possible to certainly loop back the signal by the VD driver 30, thereby avoiding the influence of skew and noise.

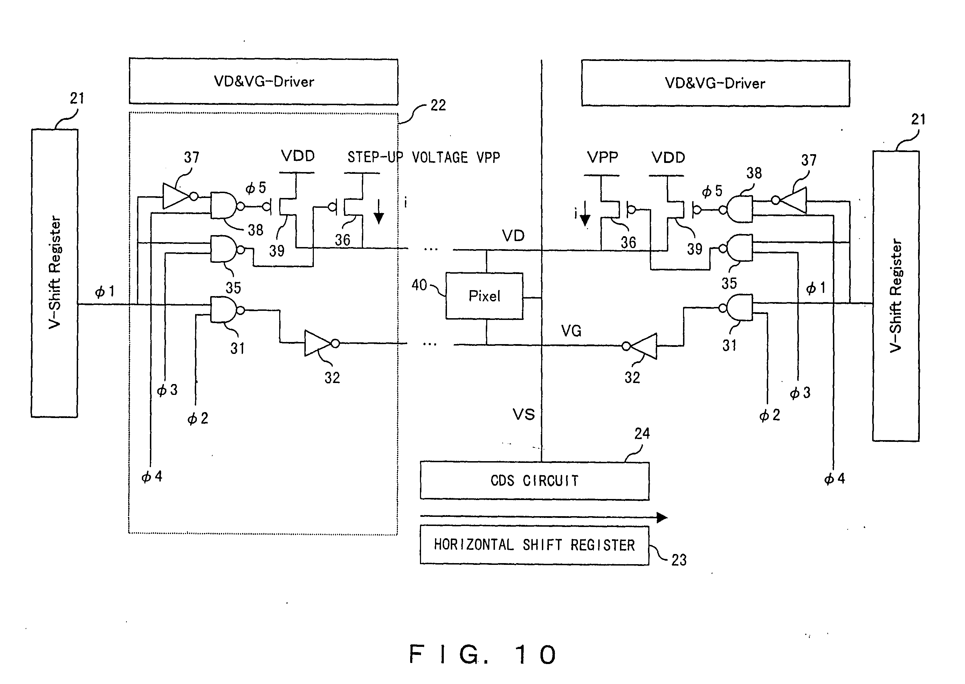

FIG. 10 shows the configuration of the driver and the vertical shift register in the conventional technology as compared with FIG. 8 according to the present embodiment of the present invention. In the conventional technology, the vertical shift register 21 is provided also on the right, and the VD driver 30 on the right shown in FIG. 8 is replaced with the same VD & VG driver 22 as on the left. On the other hand, as is shown in FIG. 8, the right vertical shift register is omitted, and the configuration of the driver on the right is simpler, thereby contributing to a smaller image pickup device and a lower cost.

We explained the above embodiments using 3-transistor-type pixels, but it is obvious that the present invention is not limited to such a pixel type apparatus.

## Claims

1. A solid-state image pickup apparatus having pixels (40) arranged in a two-dimensional pixel array (20), comprising:
a vertical shift register (21) for outputting a selection signal for selection of a horizontal sequence of pixels in the two-dimensional pixel array (20), and for providing said selection signal for the pixel array (20) in either an outer left side or an outer right side of the pixel array (20); and
a voltage applying device (34) for applying a power supply voltage for reading data of said horizontal sequence of pixels from an opposite outer side to a supply side of said selection signal to the pixel array (20) after the vertical shift register (21) outputs said selection signal.

2. The apparatus according to claim 1, further comprising
a voltage applying device (36) on the vertical shift register side for applying a power supply voltage for reading data of said horizontal sequence of pixels from a side receiving said selection signal output by the vertical shift register (21) to the pixel array (20) after the selection signal is output by the vertical shift register (21).

3. The apparatus according to claim 1, wherein
said voltage applying device (34) applies a step-up voltage higher than the power supply voltage to the pixel(40).

4. The apparatus according to claim 2, wherein
said voltage applying device (34) and said voltage applying device (36) on the vertical shift register side apply a step-up voltage higher than the power supply voltage to the pixel (40).

5. The apparatus according to claim 2, further comprising
a first delay device (31, 32) for delaying the selection signal output from the vertical shift register (21) and for supplying the delayed signal to said voltage applying device (34).

6. The apparatus according to claim 5, further comprising
a second delay device (33) for further delaying output of said first delay device (31, 32) and for applying the delayed output to said voltage applying device (34).

7. The apparatus according to claim 6, further comprising
a third delay device (35) for delaying a selection signal output from said vertical shift register (21) by a time corresponding to a sum of a delay time by said first delay device (31, 32) and a delay time by said second delay device (33), and for applying the signal to said voltage applying device (36) on the vertical shift register side.

8. The apparatus according to claim 5, wherein:
each of the pixels (40) is configured by a CMOS element; and
output of said first delay device (31, 32) is applied to a gate of a MOS transistor (34) for providing a read data signal from the pixel (40) to an external unit (24) of the pixel array (20).

9. A pixel read voltage applying method for reading pixel data in a solid-state image pickup apparatus having pixels (40) in a two-dimensional pixel array (20), comprising:
supplying a selection signal for selection of a horizontal sequence of pixels in the two-dimensional pixel array (20) from either an outer left side or an outer right side of the two-dimensional pixel array (20); and
applying a power supply voltage for reading data of said horizontal sequence of pixels from an opposite outer side to a supply side of the selection signal after supplying the selection signal.

10. A solid-state image pickup apparatus having a plurality of pixels (40) in a two-dimensional pixel array (20), and for providing a voltage from both ends of pixel rows in the two-dimensional pixel array (20), comprising:
a shift register (21), provided only on one end of the two ends, for selecting the row to which the voltage is supplied; and
a voltage applying device (34) for receiving a voltage fluctuation caused by a row selection of the shift register (21) on the other end, and supplying a voltage on the other end to a row that the voltage fluctuation occurred.
